(19) Europäisches Patentamt
European Patent Office
Office européen des brevets

(11) Veröffentlichungsnummer: **0 309 524 B1**

(12) **EUROPÄISCHE PATENTSCHRIFT**

(45) Veröffentlichungstag der Patentschrift: **07.11.90**

(51) Int. Cl.⁵: **F 16 L 59/12**

(21) Anmeldenummer: **88903177.9**

(22) Anmeldetag: **14.04.88**

(86) Internationale Anmeldenummer:
**PCT/DE88/00231**

(87) Internationale Veröffentlichungsnummer:
**WO 88/08099 20.10.88 Gazette 88/23**

(54) ABSTANDSHALTER FÜR THERMISCH BEAUFSCHLAGTE ROHRE.

(30) Priorität: **16.04.87 DE 8705667 u**

(43) Veröffentlichungstag der Anmeldung:
**05.04.89 Patentblatt 89/14**

(45) Bekanntmachung des Hinweises auf die
Patenterteilung:
**07.11.90 Patentblatt 90/45**

(84) Benannte Vertragsstaaten:
**AT BE CH DE FR GB IT LI LU NL SE**

(56) Entgegenhaltungen:
**CH-A- 343 195**
**US-A-4 298 554**

(73) Patentinhaber: **Rheinhold & Mahla GmbH**
**Gneisenaustrasse 15**
**D-8000 München 50 (DE)**

(72) Erfinder: **TIMPERT, Manfred**
**Schetterstr. 52**
**D-4235 Schermbeck (DE)**

(74) Vertreter: **Seibert, Rudolf, Dipl.-Ing. et al**
**Rechtsanwälte Seibert & Partner**
**Tattenbachstrasse 9**
**D-8000 München 22 (DE)**

EP 0 309 524 B1

## Beschreibung

Die Erfindung bezieht sich auf Abstandshalter für thermisch beaufschlagt Rohre, bestehend aus scheibenförmigen Ringen, die entlang eines Durchmessers hälftig geteilt sind, die Rohre umgeben und einen äußeren Hüllmantel auf definiertem Abstand halten.

Derartige Abstandshalter sind aus der CH-A-343,195 bekannt. Danach sind die ebenfalls hälftig geteilten, scheibenförmigen Abstandshalter vor der Montage jedoch fest in den äußeren Hüllmantel integriert, der aus zwei Halbschalen gebildet ist. Diese Halbschalen mit den integrierten Abstandshalter werden dann über das zu isolierende Rohr geklappt und gegeneinander arretiert.

Mit einer solchen Gestaltung ist es jedoch nicht möglich, zunächst unabhängig vom äußeren Hüllmantel die Abstandshalter für sich auf das zu isolierende Rohr aufzubringen, es sei denn, man verwendet eine aufwendige Verklebung, z.B. mit seitlichen Klebebändern.

Demgegenüber liegt der Erfindung die Aufgabe zugrunde, Abstandshalter zu schaffen, die einfach herzustellen und insbesondere ohne zusätzliche Hilfsmittel leicht zu montieren sind, wobei die Abstandshalter nach der Montage ohne zusätzliche Hilfsmittel eigenstabil unter ausreichender Druckfestigkeit einen exakten Abstand gewährleisten und die Montage des äußeren Hüllmantels ohne Schwierigkeiten erlauben.

Zur Lösung dieser Aufgabe ist erfindungsgemäß vorgesehen, daß die Ringhälften aus verpreßtem Mineralfasermaterial hoher Druckfestigkeit bestehen und identisch gestaltet sind, derart, daß bei jeder Ringhälfte die eine der Teilungsfugenflächen einen schwalbenschwanzförmig vorspringenden Steg und die andere Teilungsfugenfläche eine schwalbenschwanzförmig ausgeschnittene Nut aufweisen.

Durch die identische Ausbildung der beiden Ringhälften der Abstandshalter lassen sich diese durch seitliches Ineinanderschieben sehr leicht montieren und ergeben dann einen starren Ring mit formschlüssig ineinandergreifenden Fugen, die sich von selbst nicht mehr lösen können.

Es sind in diesem Zusammenhang zwar aus der US-A-4,298,554 Rohrisolierungsschalen beschrieben, die jeweils eine realtiv große Länge aufweisen und jeweils in zwei Hälften ausgeführt sind, wobei bei einer Ausführungsform die Teilungsfugen ebenfalls schwalbenschwanzförmig ausgebildet sind, um eine in einer Ebene verlaufende Wärmebrücke nach außen zu vermeiden. Eine Montage durch seitliches Ineinanderschieben, wie bei schmalen Ringen ist dabei jedoch nicht möglich, sondern die Schalen werden unter erheblicher Druckaufwendung senkrecht ineinander gepreßt, wobei jedoch eine Verformung der Teilungsfugen oder ein Ausreißen derselben bei der Montage der Rohrisolierungsschalen nicht zu vermeiden sind.

Vorteilhaft wird bei den erfindungsgemäßen Abstandshaltern die geringste Breite der Nut bzw. des Steges der schwalbenschwanzförmigen Ausformung etwa jeweils ein Drittel der radialen Stärke der Ringe gewählt.

Anhand einer schematischen Zeichnung werden Aufbau und Wirkungsweise von Ausführungsbeispielen nach der Erfindung näher erläutert. Dabei zeigen:

Fig. 1 eine Draufsicht auf einen ringförmigen Abstandshalter mit den Teilungsfugen und

Fig. 2 einen Längsschnitt durch die Isolierung eines thermisch beaufschlagten Rohres mit den ringförmigen Abstandshaltern.

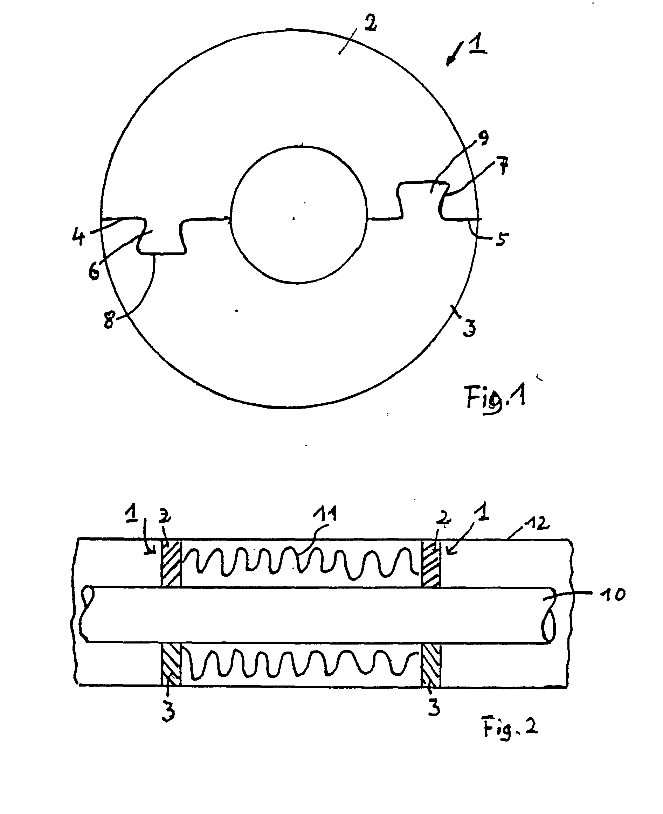

Wie man aus der Draufsicht nach Fig. 1 ersieht, besteht der ringförmige Abstandshalter 1 aus zwei symmetrisch ausgebildeten Ringhälften 2 und 3. Jede der beiden auf einem gemeinsamen Durchmesser liegenden Teilungsfugen 4 und 5 ist dabei schwalbenschwanzförmig ausgebildet und zwar in der Weise, daß die obere Ringhälfte 2 an der linken Teilungsfuge 4 einen mittigen, schwalbenschwanzförmig vorspringenden Steg 6 und an der rechten Teilungsfuge 5 eine schwalbenschwanzförmig ausgeschnittene Nut 7 aufweist, während die untere Ringhälfte 3 komplementär an der linken Teilungsfuge 4 mit einer schwalbenschwanzförmig ausgeschnittenen Nut 8 und an der rechten Teilungsfuge 5 mit einem schwalbenschwanzförmig vorspringenden Steg 9 versehen sind.

Durch diese Gestaltung sind alle Ringhälften der Abstandshalter identisch ausgebildet, was insbesondere die Herstellung und die Lagerhaltung wesentlich vereinfacht. Durch seitliches Ineinanderschieben zweier Ringhälften 2 und 3 ergibt sich dann ein stabiler ringförmiger Abstandshalter 1, der in der Hauptbeanspruchungsrichtung durch formschlüssige Verbindung beider Ringhälften 2 und 3 gegen unbeabsichtigtes Lösen gesichert ist.

Als Material für diese Abstandshalter dienen zweckmäßigerweise verpreßte Mineralfasern, wie sie z.B. bei herkömmlichen Brandschutzmatten verwendet werden, die bei entsprechend dichter Verpressung einerseits eine hohe Druckfestigkeit aufweisen, andererseits aber aus einem vollen Materialblock leicht herausgeschnitten werden können.

In Fig. 2 ist ein Längsschnitt durch eine fertig isolierte Rohrleitung dargestellt. Auf das thermisch beaufschlagte Rohr 10 beispielsweise eine Fernwärmeleitung werden in vorgegebenen Abständen jeweils entsprechende Abstandshalter 1 durch seitliches Ineinanderschieben von jeweils zwei Ringhälften 2 und 3 aufgesetzt, die dann durch die formschlüssig ineinandergreifenden Fugen ohne weitere Hilfsmittel auf dem Rohr 10 verbleiben und arretiert sind. Nach Einfügen der entsprechend Isolierung 11 zwischen jeweils zwei Abstandshaltern 1 wird dann der äußere Hüllmantel 12 aufgebracht und über eine entsprechende, nicht näher dargestellte Längsfuge dicht verschlossen.

Neben dem Vorteil einer sehr einfachen Montage weisen die identisch gefertigen ringförmigen Abstandshalter 1 eine hohe Abstandstreue wegen der hohen Druckfestigkeit des verwendeten Materials auf. Wegen der niedrigen Wärmeleitfähigkeit der Abstandshalter treten auch geringe Wärmeverluste wegen der niedrigen Wärmeleitfähigkeit der Ringhälften auf. Schließlich ergibt sich eine sehr kostengünstige Fertigung, die wegen identischer Gestaltung der einzelnen Teile und Herstellen durch einfaches Aussägen bzw. Ausschneiden auch leicht automatisiert werden kann.

**Patentansprüche**

1. Abstandshalter (1) für thermisch beaufschlagte Rohre (10), bestehend aus scheibenförmigen Ringen (1), die entlang eines Durchmessers hälftig geteilt sind, die Rohre (10) umgeben und einen äußeren Hüllmantel (12) auf definiertem Abstand halten, dadurch gekennzeichnet, daß die Ringhälften (2, 3) aus verpreßtem Mineralfasermaterial hoher Druckfestigkeit bestehen und identisch gestaltet sind, derart, daß bei jeder Ringhälfte (2, 3) die eine der Teilungsfugenflächen einen schwalbenschwanzförmig vorspringenden Steg (6, 9) und die andere Teilungsfugenfläche eine schwalbenschwanzförmig ausgeschnittene Nut (7, 8) aufweisen.

2. Abstandshalter nach Anspruch 1, dadurch gekennzeichnet, daß die geringste Breite der Nut (7, 8) bzw. des Steges (6, 9) etwa ein Drittel der radialen Stärke der Ringe (1) beträgt.

**Revendications**

1. Entretoise (1) pour tuyaux (10) sollicités thermiquement, constituée d'anneaux (1) en forme de disques qui sont subdivisés par moitié le long d'un diamètre, qui entourent des tuyaux (10) et qui maintiennent une enveloppe extérieure (12) à une distance définie, caractérisée en ce que les moitiés d'anneaux (2, 3) sont en matière fibreuse minérale moulée ou pressée de grande résistance à la compression et sont conformés de manière identique, de façon que, pour chaque moitié d'anneau (2, 3) l'une des surfaces du joint de séparation comporte un tenon (6, 9) en saillie, en forme de queue d'aronde et l'autre surface de joint de séparation comporte une mortaise (7, 8) découpée en forme de queue d'aronde.

2. Entretoise suivant la revendication 1, caractérisée en ce que la largeur la plus petite de la mortaise (7, 8) ou du tenon (6, 9) représente environ untiers de l'épaisseur radiale des anneaux (1).

**Claims**

1. A spacer (1) for pipes (10) subjected to thermal loads, comprising disc-shaped rings (1) which are divided in half along a diameter, surround the pipes (10) and maintain an outer casing (12) at a determinate distance, characterised in that the ring halves (2, 3) are composed of compressed mineral fibre material of high pressure resistance and are of identical formation, in such manner that in the case of each ring half (2, 3) one of the dividing joint surfaces comprises a projecting, dovetailed rib (6, 9) and the other dividing joint surface comprises a cutout, dovetailed groove (7, 8).

2. A spacer as claimed in claim 1, characterised in that the smallest breadth of the groove (7, 8) and the rib (6, 9) respectively amounts to approximately one third of the radial thickness of the rings (1).

2

9

7

4

5

6

8

3

1

Fig.1

1 2 11 2 1 12

3 3

10

Fig. 2

1